# FASCICULE DE BREVET EUROPEEN

(11) **EP 4 410 650 B1**
(45) Date de publication et mention de la délivrance du brevet: **05.11.2025**
(21) Numéro de dépôt: 24152775.3
(22) Date de dépôt: 19.01.2024
(51) Int. Cl.: B62K 5/003, B62K 3/12

(54) **VÉHICULE À PÉDALES POUR UN TRANSPORT COLLECTIF ET COLLABORATIF**
PEDALFAHRZEUG FÜR KOLLEKTIVEN UND KOLLABORATIVEN TRANSPORT
PEDAL VEHICLE FOR COLLECTIVE AND COLLABORATIVE TRANSPORT

(30) Priorité: 31.01.2023 FR 2300876
(43) Date de publication de la demande: 07.08.2024
(73) Titulaire: Humbird, 44100 Nantes (FR)
(72) Inventeur: ROBERT, Jean-François, 44640 Le Pellerin (FR)
(74) Mandataire: Lequien, Philippe

(56) Documents cités:
- DE-U1- 202016 004 718
- FR-A1- 2 592 356

## Description

Le domaine de l'invention est celui de la conception et de la fabrication de véhicules à pédales.

L'invention concerne plus particulièrement un véhicule à pédales permettant le transport de plusieurs personnes, dont des passagers qui disposent également de pédales pour pouvoir propulser le véhicule.

Des véhicules disposant d'une pluralité de roues, par exemple nommés « Rosalie », peuvent accueillir un ou plusieurs passagers qui disposent de pédales pour le propulser.

Dans le domaine de l'invention, il est connu la demande de brevet d'invention publiée sous le numéro FR 2 592 356 qui décrit un quadricycle biplace comprenant un mécanisme de transmission d'un effort de propulsion par pédalage des passagers. Il est aussi connu la demande de brevet numéro DE202016004718U, qui décrit un véhicule comprenant au moins trois roues, dont au moins une roue avant, une roue arrière droite, et une roue arrière gauche, un poste de pilotage comprenant un organe de pilotage couplé à la roue avant pour modifier l'orientation du véhicule, et un pédalier, au moins deux postes de passager répartis en deux groupes, dont un groupe droit et un groupe gauche, chaque poste de passager comprenant un pédalier.

Le document FR 2 592 356 précité décrit notamment deux quadricycles qui permettent chacun à deux personnes de pédaler pour propulser le quadricycle.

Pour le premier quadricycle, le pédalage des deux personnes est retransmis de manière distincte et indépendante à deux roues d'un même essieu, et plus spécifiquement le pédalage d'une personne située à gauche du véhicule et retransmis à la roue gauche de l'essieu tandis que le pédalage fourni par la personne située à droite du véhicule est retransmis à la roue droite de l'essieu.

Pour le deuxième quadricycle, les deux passagers sont positionnés en ligne sur le véhicule et les chaînes de transmission permettent de retransmettre les efforts de pédalage sur les roues d'un même essieu, toujours en distinguant en fonction de la roue l'origine de la force motrice issue du pédalage des passagers.

Plus généralement, certains types de conception de quadricycles et de véhicules à pédales pour le transport d'une pluralité de personnes sont complexes et peuvent potentiellement présenter un défaut de fiabilité.

Un besoin relatif de moyens de transport collectifs non polluants émerge également, notamment pour remplacer des types de transports potentiellement polluants.

L'invention a notamment pour objectif de pallier à ce besoin de l'art antérieur et à ses inconvénients.

Plus précisément, l'invention a pour objectif de proposer un véhicule à pédales pour un transport collectif qui présente un mécanisme simple.

L'invention a également pour objectif de fournir un tel véhicule qui présente une fiabilité importante, et ce même si un nombre important de passagers pédale en même temps.

Ces objectifs, ainsi que d'autres qui apparaîtront par la suite, sont atteints grâce à l'invention qui a pour objet un véhicule comprenant :
- au moins trois roues, dont au moins une roue avant, une roue arrière droite, et une roue arrière gauche ;
- un poste de pilotage comprenant un organe de pilotage couplé à la roue avant pour modifier l'orientation du véhicule, et un pédalier couplé à ladite au moins une roue avant pour l'entraîner en rotation ;
- au moins deux postes de passager répartis en deux groupes, dont un groupe droit et un groupe gauche, chaque poste de passager comprenant un pédalier ;
- le ou les pédaliers du groupe droit étant couplés uniquement à la roue arrière droite pour l'entraîner en rotation ;
- le ou les pédaliers du groupe gauche étant couplés uniquement à la roue arrière gauche pour l'entraîner en rotation,
- le pédalier du poste de pilotage étant couplé uniquement à la ou aux roues avant.

Ce véhicule constitue un moyen de transport collectif, et permet le transport d'au moins deux passagers, dont au moins un dans chaque groupe.

Ce moyen de transport est également collaboratif du fait que les passagers transportés par le véhicule peuvent participer à la propulsion du véhicule en pédalant.

Grâce au découplage entre les deux groupes, un aspect collaboratif supplémentaire apparaît. Il n'existe pas de différentiel entre les deux roues arrière et dans certaines situations l'absence de pédalage d'un groupe peut nuire à la qualité de la propulsion du véhicule, ce qui entraîne naturellement la motivation de l'ensemble des passagers à pédaler pour propulser le véhicule.

Cette conception est également particulièrement simple. En effet, il n'y a pas de couplage entre le pédalage réalisé par les deux groupes, et entre le pédalage réalisé par chacun de ces groupes avec celui du conducteur.

En d'autres termes, si seul le groupe gauche pédale, alors seule la roue arrière gauche sera entraînée en mouvement par le pédalage.

Enfin, cette conception implique des chaînes mécaniques simples, limitant les contraintes mécaniques.

Cette limitation des contraintes mécaniques améliore la fiabilité du véhicule. En effet, un seul axe d'une roue arrière ne subit pas l'intégralité des efforts résultant du pédalage de l'ensemble des personnes pédalant sur le véhicule.

Selon un mode de réalisation préféré, le véhicule comprend un mécanisme d'assistance électrique au pédalage associé au pédalier du poste de pilotage.

Le pilote du véhicule peut ainsi faire avancer aisément le véhicule en l'absence de passagers qui pourraient fournir un effort de pédalage complémentaire au sien.

Le véhicule à pédales permet ainsi au pilote de rejoindre des lieux d'emport ou de dépose de passagers sans trop éprouver le pilote.

Préférentiellement, le véhicule comprend deux roues avant couplées l'une à l'autre par un différentiel.

Le pilote dispose alors d'une meilleure facilité à tourner.

Selon une conception préférée, les pédaliers de chaque poste de passager est un pédalier indépendant à roue libre.

De cette manière, chaque pédalier d'un poste de passager est configuré pour ne pas être entraîné en rotation par les autres pédaliers du groupe, ou par la rotation de la roue arrière couplée au pédalier dudit groupe.

Ceci permet d'éviter à un passager n'arrivant pas à pédaler à une vitesse suffisante, ou ne pouvant pas momentanément pédaler, d'avoir à suivre le rythme imposé par la progression du véhicule ou par le pédalage des autres passagers de son groupe.

Selon un mode de réalisation avantageux, le véhicule comprend, pour chacune de la roue arrière droite et de la roue arrière gauche, un pignon de transmission solidaire en rotation de ladite roue arrière.

Grâce à ce mode de réalisation, les efforts résultant du pédalage d'une pluralité de personnes d'un groupe de poste de passagers, n'entraîne pas une somme d'efforts qui risquerait de compromettre la fiabilité de la liaison au niveau du pignon de transmission qui est solidaire en rotation de la roue arrière. En effet, à la différence d'un pignon de type roue libre, un pignon de transmission solidaire à l'axe de la roue présente, à dimensionnement équivalent, une meilleure résistance mécanique.

Selon une solution préférée, le véhicule comprend un châssis comprenant deux poutres s'étendant longitudinalement parallèlement l'une à l'autre, dont une poutre droite située du côté droit du véhicule, et une poutre gauche située du côté gauche du véhicule, et en ce que :
- la poutre droite supporte les postes de passager du groupe droit qui sont disposés en ligne ;
- la poutre gauche supporte les postes de passager du groupe gauche qui sont disposés en ligne.

Cette solution simplifie l'architecture du véhicule et permet d'en améliorer sa fiabilité du fait que les efforts résultant de la présence de passagers sur les postes de passager sont repris directement par les poutres.

Préférentiellement, les pédaliers des postes de passager sont directement assemblés sur les poutres.

Cette solution est simple et facilite l'intégration des pédaliers sur le véhicule.

Préférentiellement, pour chaque groupe :
- le ou les pédaliers directement adjacents à la roue arrière à laquelle ils sont couplés, par rapport aux autres pédaliers dudit groupe, sont directement couplés au pignon de transmission solidaire en rotation de ladite roue arrière par une chaîne de transmission distincte pour chaque pédalier ;
- les autres pédaliers étant chacun couplé avec une chaîne de transmission distincte par paire de pédaliers directement adjacents.

Cet ensemble en série de chaînes de transmission facilite la retransmission des efforts de pédalage tout en présentant une conception simple à mettre en oeuvre et à fiabiliser.

Un défaut sur l'une des chaînes de transmission n'impacte pas les autres chaînes de transmission en aval en direction de la roue arrière couplée au pédalier du groupe.

Selon un mode de réalisation préféré du véhicule :
- le pédalier du poste de pilotage est couplé à la ou les roues avant par un dispositif de transmission comprenant une pluralité de rapport de transmission, dont un rapport de transmission à forte démultiplication, un rapport de transmission à faible démultiplication, et au moins un rapport de transmission intermédiaire présentant un coefficient de démultiplication intermédiaire situé entre un coefficient de démultiplication du rapport de transmission à faible démultiplication et un coefficient de démultiplication du rapport de transmission à forte démultiplication ;
- les pédaliers des postes de passager sont couplés aux roues arrière par un unique rapport de transmission présentant un coefficient de démultiplication égal au coefficient de démultiplication du rapport de transmission à forte démultiplication ou au coefficient de démultiplication du ou de l'un des rapports de transmission intermédiaire, ou compris entre le coefficient de démultiplication du rapport de transmission à forte démultiplication et le coefficient de démultiplication du ou de l'un des rapports de transmission intermédiaire.

De cette manière, les passagers disposant d'un rapport de transmission unique, ce qui simplifie et fiabilise la transmission. Il est ainsi évité des problèmes relatifs à la gestion du passage de vitesses "sous couple" et de l'impossibilité de synchroniser simplement un délestage du couple propice au passage des rapports.

La détermination du coefficient de démultiplication de l'unique rapport de transmission est fonction de la vitesse d'utilisation moyenne visée du véhicule et des aptitudes en côtes visées. Pour les véhicules utilisés en région montagneuse, on raccourcit le braquet, et pour ceux qui utilisés en plaine, il est allongé. Cela permet d'une part de disposer d'une force plus importante en montée, là où l'on en a besoin (braquet passagers un peu court), et d'autre part d'offrir un bon confort de pédalage ( fréquence de pédalage environ 60 tr.mn⁻¹) à la vitesse de service du véhicule (hypothèse environ 15 km.h⁻¹). Cela permet aussi de ne pas permettre aux passager d'entrainer le véhicule à des vitesses trop élevées qui pourraient le mettre en danger quand il est à pleine charge (faux plats, descentes, etc).

De son côté, le pilote qui dispose d'une transmission "dissociée" des passagers, peut profiter de tous types de changements de rapports à sa convenance (dérailleurs, moyeux à trains épicycloïdaux, boîte de vitesses, etc) dans la mesure où il peut gérer simplement les ruptures de couples comme il le ferait sur un vélo traditionnel.

Cette opportunité d'ajustement de la démultiplication facilite les déplacements du véhicules "à vide", quand le pilote est seul. Il profite ainsi d'un étalement de transmission propice au franchissement de pentes et peut aussi rouler plus vite (plat, descentes, etc) alors que sa masse est faible et qu'il n'y a pas de danger d'emballement ni d'échauffement des freins (masse et énergie cinétique réduites). Cette particularité améliore l'efficacité du véhicule, car elle permet de réduire les pertes de temps dans les phases où le véhicule de comprend pas de passagers. Le véhicule est donc très efficient à vide grâce à sa faculté de disposer de rapports de transmission variables pour le pilote.

D'autres caractéristiques et avantages de l'invention apparaîtront plus clairement à la lecture de la description suivante de différents modes de réalisation préférentiels de l'invention, donnés à titre d'exemples illustratifs et non limitatifs, et des dessins annexés parmi lesquels :
- la figure 1 est une représentation schématique en perspective d'un véhicule selon l'invention ;
- la figure 2 est une représentation schématique vue de côté du véhicule selon l'invention ;
- la figure 3 est une représentation selon une vue en coupe d'une partie du véhicule illustré sur la figure 2, centrée sur les pédaliers d'un groupe de passagers ;
- la figure 4 est une représentation schématique d'une vue en coupe du véhicule vu de dessus.

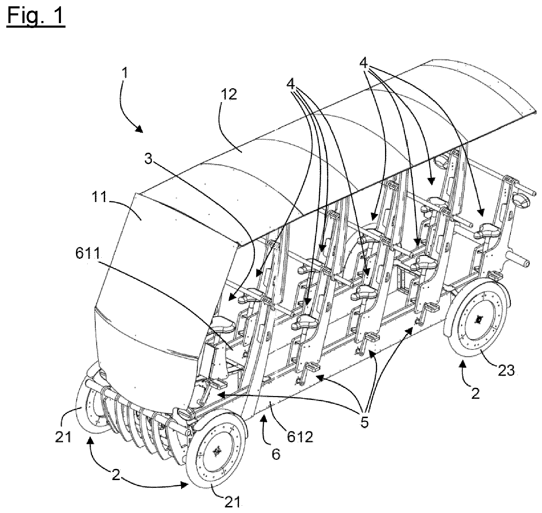

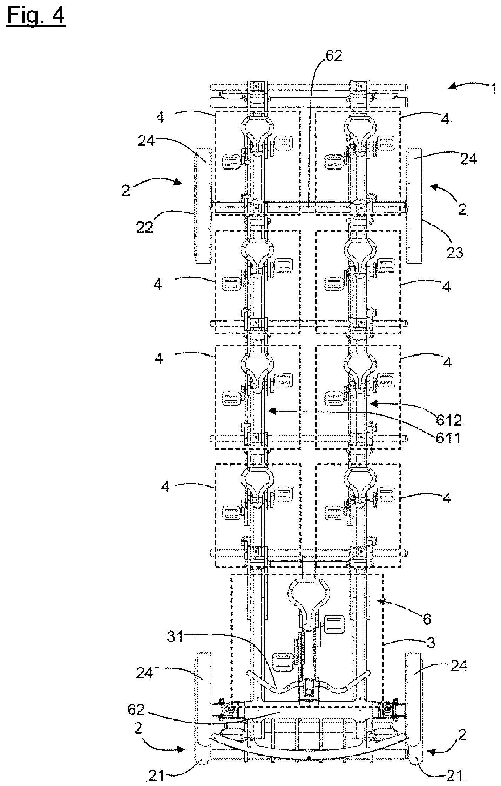

En référence aux figures 1 à 4, un véhicule 1 selon l'invention est représenté.

Ce véhicule 1 comprend au moins trois roues 2 dont au moins une roue avant 21, une roue arrière droite 22, et une roue arrière gauche 23.

Selon le présent mode de réalisation, le véhicule 1 comprend deux roues avant 21.

Ces deux roues avant 21 sont des roues motrices et directrices.

Selon un autre mode de réalisation envisageable, le véhicule 1 pourrait comprendre une unique roue avant 21 motrice et directrice.

Tel que cela est détaillé par la suite, la roue arrière droite 22 et la roue arrière gauche 23 sont également motrices.

Selon le présent mode de réalisation, le véhicule 1 comprend un poste de pilotage 3 et huit postes de passager 4. Toutefois, il est envisageable selon un autre mode de réalisation que le véhicule 1 comprendrait deux, quatre, ou six postes de passagers 4.

Le poste de pilotage 3 est positionné sur une partie avant du véhicule 1 tandis que les postes de passager 4 sont positionnés en retrait du poste de pilotage 3 vers l'arrière du véhicule 1.

Les postes de passager 4 sont notamment répartis en deux groupes, dont un groupe droit et un groupe gauche.

Selon le présent mode de réalisation, le véhicule 1 comprend quatre postes de passager 4 dans le groupe droit et quatre postes de passager 4 dans le groupe gauche.

Au sein de chaque groupe, les postes de passager 4 sont disposés en ligne.

En d'autres termes, les postes de passager 4 au sein d'un groupe sont positionnés les uns derrière les autres.

En référence aux figures 1 à 4, le véhicule 1 comprend un châssis 6.

Ce châssis 6 comprend deux poutres.

Le châssis 6 comprend également une pluralité de traverses 62 reliant les deux poutres.

Les deux poutres s'étendent longitudinalement parallèlement l'une à l'autre.

Les deux poutres se composent d'une poutre droite 611 située du côté droit du véhicule 1, et d'une poutre gauche 612 située du côté gauche du véhicule 1.

La poutre droite 611 supporte les postes de passager 4 du groupe droit.

La poutre gauche 612 supporte quant à elle les postes de passager 4 du groupe gauche.

Le poste de pilotage 3 comprend un organe de pilotage 31 qui est couplé à la roue avant 21 pour modifier l'orientation du véhicule 1.

L'organe de pilotage 31 correspond notamment à un guidon.

L'organe de pilotage 31 peut également prendre la forme d'un volant.

L'organe de pilotage 31 permet de modifier l'orientation des roues avant 21 pour permettre de diriger le véhicule 1, et plus particulièrement permet de modifier leur orientation angulaire autour d'un axe transversal à un plan de roulement définit par les roues.

Le poste de pilotage 3 comprend également un pédalier 5.

Ce pédalier 5 est couplé à au moins une roue avant 21 pour l'entraîner en rotation.

Selon le présent mode de réalisation, le pédalier 5 est couplé aux deux roues avant 21 pour les entraîner en rotation.

Le pédalier 5 du poste de pilotage 3 est couplé uniquement aux roues avant 21. En effet, une transmission associée au poste de pilotage 3 ne couple que le pédalier 5 du poste de pilotage 3 aux roues avant 21.

En d'autres termes, le pédalier 5 du poste de pilotage 3 n'est pas couplé aux roues arrière, et ne permet pas ainsi de les entraîner en rotation.

Les deux roues avant 21 du véhicule sont couplées l'une à l'autre par un différentiel.

De plus, le véhicule 1 comprend un mécanisme d'assistance électrique au pédalage.

Ce mécanisme d'assistance électrique au pédalage comprend notamment un capteur de pédalage, un contrôleur, une batterie électrique rechargeable, ainsi qu'un moteur électrique alimenté par la batterie électrique. Ce mécanisme d'assistance électrique au pédalage est associé au pédalier 5 du poste de pilotage 3.

Lors du pédalage du pilote installé dans le poste de pilotage 3, le mécanisme d'assistance électrique au pédalage fournit une assistance au pilote en détectant le pédalage du pilote par le biais du capteur, puis en actionnant et en contrôlant le moteur électrique par le biais du contrôleur.

Le poste de pilotage 3 comprend également une assise.

Tel que cela est visible sur les figures, chaque poste de passager 4 comprend un pédalier 5.

Chaque poste de passager 4 comprend également une assise.

Les pédaliers 5 du groupe droit sont couplés uniquement à la roue arrière droite 22 pour l'entraîner en rotation.

De même, les pédaliers 5 du groupe gauche sont couplés uniquement à la roue arrière gauche 23 pour l'entrainer en rotation.

Le véhicule 1 ne comprend ainsi pas de couplage de l'entrainement moteur résultant d'un pédalage entre les pédaliers 5 du groupe droit et la roue arrière gauche 23, ni entre les pédaliers 5 du groupe gauche et la roue arrière droite 22.

Le pédalier 5 de chaque poste de passager 4 est un pédalier indépendant à roue libre. En d'autres termes, chaque pédalier 5 de chaque poste de passager 4 intègre un embrayage configuré pour ne pas entrainer en rotation le pédalier lors d'une rotation des autres pédaliers du groupe, ou par la rotation de la roue arrière qui est couplée au pédalier dudit groupe.

Plus spécifiquement, le pédalier 5 de chaque poste de passager 4 est pourvu :
- d'un ou de deux plateaux de transmission 71, pourvu des crans, pour lequel, pour chaque plateau de transmission 71, une chaîne de transmission 73 distincte passe dans les crans du plateau de transmission 71 ;
- de deux pédales solidaires l'une de l'autre et montées à rotation autour d'un axe sur un palier ;
- l'embrayage (de type roue libre) entre le ou les plateaux de transmission 71 et les deux pédales.

Le véhicule 1 comprend, pour chacune de la roue arrière droite 22 et de la roue arrière gauche 23, un pignon de transmission solidaire en rotation de ladite roue arrière.

En d'autres termes, le véhicule 1 ne comprend pas d'embrayage du type « roue libre » directement au niveau de la roue arrière. De cette manière le mécanisme est plus fiable et supporte mieux les efforts appliqués par le pédalage d'une pluralité de passagers d'un groupe.

Tel que cela est visible, les pédaliers 5 des postes de passager 4 sont directement assemblés sur les poutres.

En d'autres termes, les poutres intègrent dans leur volume des paliers de pédaliers 5 à l'intérieur desquels un axe solidaire en rotation des pédaliers 5 est monté à rotation.

Tel qu'évoqué précédemment, le véhicule 1 comprend une pluralité de chaînes de transmission 73 pour transmettre un effort de pédalage jusqu'aux roues du véhicule 1.

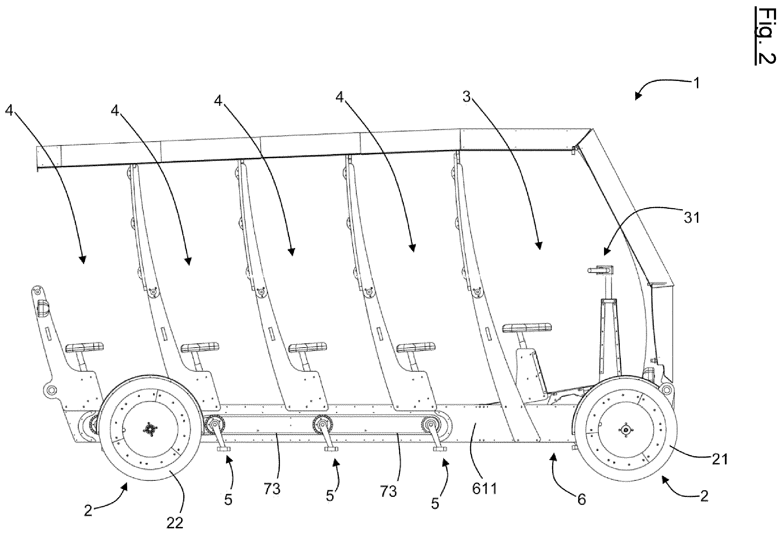

Plus particulièrement et en référence aux figures 2 à 4, pour chaque groupe, les pédaliers 5 directement adjacents à la roue arrière à laquelle ils sont couplés (c'est-à-dire les pédaliers qui encadrent la roue), par rapport aux autres pédaliers 5 du groupe, sont directement couplés au pignon de transmission solidaire en rotation de ladite roue arrière par une chaîne de transmission 73 distincte pour chaque pédalier 5.

Dans ce cas, bien entendu, le pignon de transmission présente deux disques crantés 72 solidaires en translation l'un de l'autre.

En d'autres termes, le pignon de transmission (de la roue arrière à laquelle les pédaliers d'un groupe sont rattachés) voit chacun de ses disques crantés 72 engagé avec une chaîne de transmission 73 distincte pour chacun des disques crantés 72, dont une chaîne de transmission 73 rejoint le pédalier situé vers l'arrière du véhicule et l'autre chaîne de transmission 73 rejoint le pédalier situé vers l'avant du véhicule.

Aussi, pour chaque groupe les autres pédaliers 5 sont chacun couplés avec une chaîne de transmission 73 qui est distincte par paire de pédaliers 5 directement adjacents.

En d'autres termes, un pédalier 5 est couplé avec le pédalier d'un autre poste de passager 4 situé directement devant ou directement derrière par une unique chaîne de transmission 73.

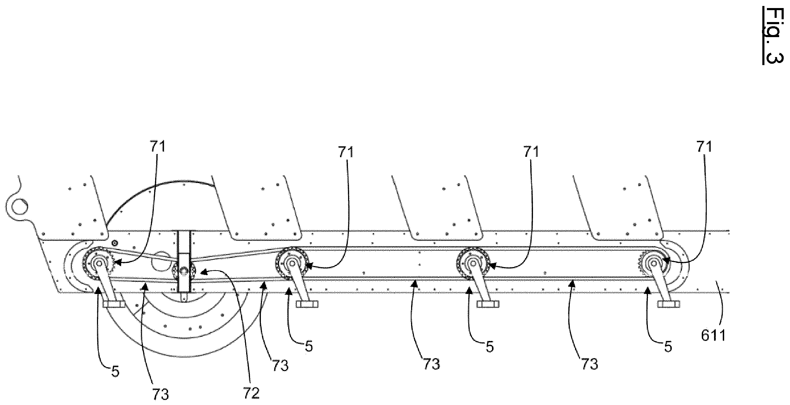

Par exemple et en référence à la figure 3, il peut être distingué 4 rangs de passagers avec le premier rang situé vers l'arrière du véhicule tandis que le 4^{ème} rang est situé juste derrière le poste de pilotage 3. Selon cette organisation :
- le plateau de transmission 71 du pédalier 5 du premier rang est couplé avec une première chaîne de transmission 73 sur l'un des deux disques crantés 72 du pignon de transmission ;
- le plateau de transmission 71 du pédalier 5 du deuxième rang est quant à lui couplé à l'autre disque cranté 72 du pignon de transmission de la roue arrière par une deuxième chaîne de transmission 73, et au plateau de transmission 71 du pédalier 5 du troisième rang par une troisième chaîne de transmission 73 ;
- le plateau de transmission 71 du troisième rang est quant à lui couplé au plateau de transmission 71 du deuxième rang par la chaîne de transmission 73 évoquée précédemment, et au plateau de transmission 71 du pédalier 5 du premier rang par une quatrième chaîne de transmission 73.

L'ensemble des chaînes de transmission des pédaliers d'un groupe de poste de passager 4 sont protégées par un carter (non représenté).

Des mécanismes tendeurs de chaîne de transmission 73 sont également couplés sur les poutres. Ces mécanismes tendeurs peuvent prendre la forme de bras ressort exerçant une pression transversalement sur une chaîne de transmission 73

Cet ensemble de moyens transmission forme ainsi un système fondamentalement simple limitant le recours à des composants complexes, et présentant une fiabilité importante.

Selon le présent mode de réalisation, le pédalier 5 du poste de pilotage 3 est couplé aux roues avant 21 par un dispositif de transmission comprenant une pluralité de rapport de transmission. Le pluralité de rapport de transmission se compose de :
- un rapport de transmission à forte démultiplication présentant un coefficient de démultiplication important, par exemple pour faciliter le franchissement d'une côte ;
- un rapport de transmission à faible démultiplication présentant un coefficient de démultiplication faible, par exemple adapté pour le pédalage dans une descente ;
- et au moins un rapport de transmission intermédiaire, par exemple trois rapport intermédiaire, présentant un coefficient de démultiplication intermédiaire situé entre le coefficient de démultiplication du rapport de transmission à faible démultiplication et le coefficient de démultiplication du rapport de transmission à forte démultiplication.

De plus, les pédaliers 5 des postes de passager 4 sont couplés aux roues arrière par un unique rapport de transmission présentant son propre coefficient de démultiplication. Ce coefficient de démultiplication est sélectionné en fonction du type de route sur lequel le véhicule est destiné à circuler. Le coefficient de démultiplication est ainsi :
- soit égal au coefficient de démultiplication du rapport de transmission à forte démultiplication ;
- soit égal au coefficient de démultiplication du ou de l'un des rapports de transmission intermédiaire ;
- soit compris entre le coefficient de démultiplication du rapport de transmission à forte démultiplication et le coefficient de démultiplication du ou de l'un des rapports de transmission intermédiaire.

Le véhicule 1 comprend encore, de manière non exhaustive, des moyens de freinage accessible dans le poste de pilotage 3, un pare-brise 11, une toiture 12, des garde-boues 24, des barres de maintien pour les passagers, ainsi que des feux de signalisation.

## Revendications

1. Véhicule (1) comprenant :
- au moins trois roues (2), dont au moins une roue avant (21), une roue arrière droite (22), et une roue arrière gauche (23) ;
- un poste de pilotage (3) comprenant un organe de pilotage (31) couplé à la roue avant (21) pour modifier l'orientation du véhicule (1), et un pédalier (5) couplé à ladite au moins une roue avant (21) pour l'entraîner en rotation ;
- au moins deux postes de passager (4) répartis en deux groupes, dont un groupe droit et un groupe gauche, chaque poste de passager (4) comprenant un pédalier (5) ;
- le ou les pédaliers (5) du groupe droit étant couplés uniquement à la roue arrière droite (22) pour l'entraîner en rotation ;
- le ou les pédaliers (5) du groupe gauche étant couplés uniquement à la roue arrière gauche (23) pour l'entraîner en rotation,
- le pédalier (5) du poste de pilotage (3) étant couplé uniquement à la ou aux roues avant (21).

2. Véhicule (1) selon la revendication précédente, **caractérisé en ce qu'**il comprend un mécanisme d'assistance électrique au pédalage associé au pédalier (5) du poste de pilotage (3).

3. Véhicule (1) selon l'une quelconque des revendications précédentes, **caractérisé en ce qu'**il comprend deux roues avant (21) couplées l'une à l'autre par un différentiel.

4. Véhicule (1) selon l'une quelconque des revendications précédentes, **caractérisé en ce que** le pédalier (5) de chaque poste de passager (4) est un pédalier indépendant à roue libre.

5. Véhicule (1) selon l'une quelconque des revendications précédentes, **caractérisé en ce qu'**il comprend, pour chacune de la roue arrière droite (22) et de la roue arrière gauche (23), un pignon de transmission solidaire en rotation de ladite roue arrière.

6. Véhicule (1) selon l'une quelconque des revendications précédentes, **caractérisé en ce qu'**il comprend un châssis (6) comprenant deux poutres s'étendant longitudinalement parallèlement l'une à l'autre, dont une poutre droite (611) située du côté droit du véhicule (1), et une poutre gauche (612) située du côté gauche du véhicule (1),
et **en ce que** :
- la poutre droite (611) supporte les postes de passager (4) du groupe droit qui sont disposés en ligne ;
- la poutre gauche (612) supporte les postes de passager (4) du groupe gauche qui sont disposés en ligne.

7. Véhicule (1) selon la revendication précédente, **caractérisé en ce que** les pédaliers (5) des postes de passager (4) sont directement assemblés sur les poutres.

8. Véhicule (1) selon la revendication 5, et l'une quelconque des revendications 6 et 7, **caractérisé en ce que**, pour chaque groupe :
- le ou les pédaliers (5) directement adjacents à la roue arrière à laquelle ils sont couplés, par rapport aux autres pédaliers (5) dudit groupe, sont directement couplés au pignon de transmission solidaire en rotation de ladite roue arrière par une chaîne de transmission (73) distincte pour chaque pédalier (5) ;
- les autres pédaliers (5) étant chacun couplé avec une chaîne de transmission (73) distincte par paire de pédaliers (5) directement adjacents.

9. Véhicule (1) selon l'une quelconque des revendications précédentes, **caractérisé en ce que** :
- le pédalier (5) du poste de pilotage (3) est couplé à la ou les roues avant (21) par un dispositif de transmission comprenant une pluralité de rapport de transmission, dont un rapport de transmission à forte démultiplication, un rapport de transmission à faible démultiplication, et au moins un rapport de transmission intermédiaire présentant un coefficient de démultiplication intermédiaire situé entre un coefficient de démultiplication du rapport de transmission à faible démultiplication et un coefficient de démultiplication du rapport de transmission à forte démultiplication ;
- les pédaliers (5) des postes de passager (4) sont couplés aux roues arrière par un unique rapport de transmission présentant un coefficient de démultiplication égal au coefficient de démultiplication du rapport de transmission à forte démultiplication ou au coefficient de démultiplication du ou de l'un des rapports de transmission intermédiaire, ou compris entre le coefficient de démultiplication du rapport de transmission à forte démultiplication et le coefficient de démultiplication du ou de l'un des rapports de transmission intermédiaire.

## Patentansprüche

1. Fahrzeug (1), das Folgendes umfasst:
- mindestens drei Räder (2), darunter mindestens ein Vorderrad (21), ein rechtes Hinterrad (22) und ein linkes Hinterrad (23);
- einen Steuerstand (3), der ein Steuerelement (31) umfasst, das mit dem Vorderrad (21) gekoppelt ist, um die Ausrichtung des Fahrzeugs (1) zu ändern, und ein Pedal (5), das mit dem mindestens einen Vorderrad (21) gekoppelt ist, um es in Drehung zu bringen;
- mindestens zwei Fahrgastplätze (4), die in zwei Gruppen unterteilt sind, darunter eine rechte Gruppe und eine linke Gruppe, wobei jeder Fahrgastplatz (4) ein Pedal (5) umfasst;
- wobei das oder die Pedale (5) der rechten Gruppe nur mit dem rechten Hinterrad (22) gekoppelt sind, um es in Drehung zu bringen;
- wobei das oder die Pedale (5) der linken Gruppe nur mit dem linken Hinterrad (23) gekoppelt sind, um es in Drehung zu bringen,
- wobei das Pedal (5) des Steuerstands (3) nur mit dem oder den Vorderrädern (21) gekoppelt ist.

2. Fahrzeug (1) nach dem vorhergehenden Anspruch, **dadurch gekennzeichnet, dass** es einen elektrischen Pedalunterstützungsmechanismus umfasst, der mit dem Pedal (5) des Steuerstands (3) verbunden ist.

3. Fahrzeug (1) nach einem der vorhergehenden Ansprüche, **dadurch gekennzeichnet, dass** es zwei Vorderräder (21) umfasst, die durch ein Differentialgetriebe miteinander gekoppelt sind.

4. Fahrzeug (1) nach einem der vorhergehenden Ansprüche, **dadurch gekennzeichnet, dass** das Pedal (5) jedes Fahrgastplatzes (4) ein unabhängiges Pedal mit Freilauf ist.

5. Fahrzeug (1) nach einem der vorhergehenden Ansprüche, **dadurch gekennzeichnet, dass** es für jedes rechte Hinterrad (22) und jedes linke Hinterrad (23) ein mit dem Hinterrad drehfest verbundenes Getrieberad umfasst.

6. Fahrzeug (1) nach einem der vorhergehenden Ansprüche, **dadurch gekennzeichnet, dass** es einen Rahmen (6) umfasst, der zwei sich längs parallel zueinander erstreckende Träger umfasst, darunter einen rechten Träger (611), der sich auf der rechten Seite des Fahrzeugs (1) befindet, und einen linken Träger (612), der sich auf der linken Seite des Fahrzeugs (1) befindet,
und dass:
- der rechte Träger (611) die Fahrgastplätze (4) der rechten Gruppe trägt, die in Reihe angeordnet sind;
- der linke Träger (612) die Fahrgastplätze (4) der linken Gruppe trägt, die in Reihe angeordnet sind.

7. Fahrzeug (1) nach dem vorhergehenden Anspruch, **dadurch gekennzeichnet, dass** die Pedale (5) der Fahrgastplätze (4) direkt an den Trägern montiert sind.

8. Fahrzeug (1) nach Anspruch 5 und einem der Ansprüche 6 und 7, **dadurch gekennzeichnet, dass** für jede Gruppe:
- das oder die Pedale (5), die direkt an das Hinterrad angrenzen, mit dem sie gekoppelt sind, im Vergleich zu den anderen Pedalen (5) der Gruppe direkt mit dem Getrieberad, das drehfest mit dem Hinterrad verbunden ist, über eine für jedes Pedal (5) separate Antriebskette (73) gekoppelt sind;
- wobei die anderen Pedale (5) jeweils mit einer separaten Antriebskette (73) pro Paar direkt benachbarter Pedale (5) gekoppelt sind.

9. Fahrzeug (1) nach einem der vorhergehenden Ansprüche, **dadurch gekennzeichnet, dass**:
- das Pedal (5) des Steuerstands (3) mit dem oder den Vorderrädern (21) über eine Übertragungsvorrichtung gekoppelt ist, die eine Vielzahl von Übertragungsverhältnissen umfasst, darunter ein Übersetzungsverhältnis mit hoher Untersetzung, ein Übersetzungsverhältnis mit niedriger Übersetzung und mindestens ein Zwischenübersetzungsverhältnis, das einen Zwischenuntersetzungskoeffizienten aufweist, der zwischen einem Untersetzungskoeffizienten des Übersetzungsverhältnisses mit niedriger Untersetzung und einem Untersetzungskoeffizienten des Übersetzungsverhältnisses mit hoher Untersetzung liegt;
- die Pedale (5) der Fahrgastplätze (4) mit den Hinterrädern durch ein einziges Übersetzungsverhältnis gekoppelt sind, das einen Untersetzungskoeffizienten aufweist, der dem Untersetzungskoeffizienten des Übersetzungsverhältnisses mit hoher Untersetzung oder dem Untersetzungskoeffizienten des oder eines der Zwischenübersetzungsverhältnisse entspricht oder zwischen dem Untersetzungskoeffizienten des Übersetzungsverhältnisses mit hoher Untersetzung und dem Untersetzungskoeffizienten des oder eines der Zwischenübersetzungsverhältnisse liegt.

## Claims

1. Vehicle (1) comprising:
- at least three wheels (2), including at least one front wheel (21), one right rear wheel (22), and one left rear wheel (23);
- a control station (3) comprising a steering mechanism (31) connected to the front wheel (21) to alter the (1) orientation of the vehicle, and a pedal assembly (5) linked to at least one front wheel (21) to drive it in rotation;
- at least two passenger stations (4) divided into two groups, including a right-hand group and a left-hand group, each passenger station (4) comprising a pedal assembly (5);
- the pedal assembly or assemblies (5) of the right-hand group being coupled only to the right-hand rear wheel (22) to drive it in rotation;
- the pedal assembly or assemblies (5) of the left-hand group being coupled only to the left-hand rear wheel (23) to drive it in rotation,
- the pedal assembly (5) of the control station (3) being coupled only to the front wheel (s) (21).

2. Vehicle (1) according to the preceding claim, **characterised in that** it comprises an electric pedal-assistance mechanism linked to the pedal assembly (5) of the control station (3).

3. Vehicle (1) according to either one of the preceding claims, **characterised in that** it comprises two front wheels (21) coupled to each other by a differential.

4. Vehicle (1) according to any one of the preceding claims, **characterised in that** the pedal assembly (5) of each passenger station (4) is an independent freewheeling pedal assembly.

5. Vehicle (1) according to any one of the preceding claims, **characterised in that** it comprises, for each of the right rear wheel (22) and the left rear wheel (23), a transmission gear constrained to rotate with said rear wheel.

6. Vehicle (1) according to any one of the preceding claims, **characterised in that** it comprises a chassis (6) comprising two beams extending longitudinally and parallel to each other, namely a right beam (611) positioned on the right side of the vehicle (1) and a left beam (612) positioned on the left side of the vehicle (1),
and **in that**:
- the right beam (611) supports the passenger stations (4) of the right-hand group, which are arranged in a line;
- the left beam (612) supports the passenger stations (4) of the left-hand group, which are arranged in a line.

7. Vehicle (1) according to the preceding claim, **characterised in that** the pedal assemblies (5) of the passenger stations (4) are directly mounted on the beams.

8. Vehicle (1) according to claim 5, and either one of claims 6 and 7, **characterised in that**, for each group:
- the pedal assembly or assemblies (5) directly adjacent to the rear wheel to which they are coupled, with respect to the other pedal assemblies (5) of said group, are directly coupled to the transmission pinion constrained to rotate with said rear wheel by a separate transmission chain (73) for each pedal assembly (5);
- the other pedal assemblies (5) each being coupled with a separate transmission chain (73) for each pair of directly adjacent pedal assemblies (5).

9. Vehicle (1) according to any one of the preceding claims, **characterised in that**:
the pedal assembly (5) of the control station (3) is coupled to the front wheel (s) (21) via a transmission device comprising a plurality of transmission ratios, including a high step-down transmission ratio, a low step-down transmission ratio, and at least one intermediate transmission ratio having an intermediate step-down coefficient falling between a step-down coefficient of the low step-down transmission ratio and a step-down coefficient of the high step-down transmission ratio;
- the pedals (5) of the passenger stations (4) are coupled to the rear wheels by a single transmission ratio having a step-down coefficient equal to the step-down coefficient of the high step-down transmission ratio or to the step-down coefficient of the or of one of the intermediate transmission ratios, or falling between the step-down coefficient of the high step-down transmission ratio and the step-down coefficient of the or of one of the intermediate transmission ratios.
